# EUROPEAN PATENT SPECIFICATION

(11) **EP 3 189 891 B1**
(45) Date of publication and mention of the grant of the patent: **20.03.2019**
(21) Application number: 14901246.0
(22) Date of filing: 03.09.2014
(51) Int. Cl.: B01J 2/22

(54) **COMBINATION PELLETIZER**
KOMBINATIONSPELLETIERER
GRANULATEUR COMBINÉ

(43) Date of publication of application: 12.07.2017
(73) Proprietor: Zhang, Yuancai, Jingjiang, Jiangsu 214527 (CN)
(72) Inventor: Zhang, Yuancai, Jingjiang, Jiangsu 214527 (CN)
(74) Representative: Gille Hrabal
(86) International application number: PCT/CN2014/085806
(87) International publication number: WO 2016/033747

(56) References cited:
- CN-U- 202 315 834
- CN-U- 202 322 581
- CN-U- 202 398 345
- CN-Y- 200 970 518
- JP-A- 2013 059 748
- SU-A1- 1 690 839

## Description

### BACKGROUND OF THE INVENTION

### 1. Field of the Invention

The present invention relates to a technique of a granulator system, and particularly to a composite granulator that employs roller mills (such as commonly-used noodle makers) for providing heat as units. The composite granulator may be used for granulating and drying high-moisture materials such as slurry materials, pasty materials and creamy materials. The present invention may be applied in the fields of environmental protection, metallurgy, light industry, chemical engineering, foods, medicines, forage, treatment of agricultural (forestry, livestock, and fishery) products and the like. The composite granulator of the present invention may also be used to granulate and dry municipal sludge and industrial sludge.

### 2. Description of Related Art

A demand for drying is on the rise as new materials (raw materials) continue to emerge. Sludge drying also serves as a prerequisite processing stage in the minimization and non-hazardous treatment of municipal sludge and industrial sludge, wherein energy consumption acting as a main consumption index particularly a major concern in the drying process.

Many researches and studies have been done in an attempt to minimize energy consumption in the drying process of sludge in environmental protection industry while guaranteeing safety and cleanliness; to granulate and dry high-moisture materials (cake materials, creamy materials, slurry materials and pasty materials) with minimum energy consumption and improved capacity per machine in the industries of chemical engineering, medicines, foods, minerals, smelting and the like. CN200970518Y discloses a granulator system with several vertically arranged layers of heated roller shafts.

### SUMMARY OF THE INVENTION

An objective of the present invention is to provide a composite granulator using heated roller mills as basic units. Simple heated roller mills are employed as units to be assembled into a composite granulator which is capable of directly quenching and drying wet and viscous materials such as cake materials, creamy materials, slurry materials and pasty materials into irregular monomer granules approximately hollowed out with minimum kinetic energy and heat consumption.

To achieve the objective of the present invention, the following technical solution is provided:
a composite granulator, comprising a case body, a temporary feed storage bin, a rolling unit, a heating supply system and a power system,
the case body 11 is provided with an air outlet 03, an air inlet 12 and a bottom support frame 16, wherein the air inlet 12 is disposed on the support frame 16 in a blind form; wet and hot gases produced inside the case body 11 are exhausted by employing manners such as exhausting the gases inside the case body, controlling induced air under enclosed negative pressure, vacuum extracting or open dissipating;
the temporary feed storage bin 01 is installed at an upper portion of the case body 11 for placing wet materials 17 therein;
the rolling unit comprises two or more layers of roller mills, each layer of roller mills having one or more sets of roller shafts 06 to be assembled into a single roller mill layer; the layers of roller mills are installed inside the case body 11 and vertically arranged;
the heating supply system comprises swivel joints 04 disposed on the roller shafts 06 of each layer of roller mills, which are matched with the air outlet 03 and the air inlet 12 to provide three kinds of heating supply forms, respectively steam, heat transfer oil and a hot gas; the steam and the heat transfer oil serve as indirect heat-exchanging heat sources, and the hot gas serves as a direct heat-exchanging heat source;
the power system comprises a power assembly and a transmission system, the power assembly is combined by one or more sets of velocity reducers and motors, the transmission system is composed of a chain wheel, a gear wheel or a transmission shaft, and the transmission velocity is subjected to segmented control by an automatic control system;
baffle plates 07 are disposed on the case body 11, and the baffle plates 07 are respectively installed at two sides of each layer of roller mills, the baffle plates 07 at one sides are lengthened to be in contact with an inner wall of the case body 11, and the lengthened baffle plates 07 at the upper layer and the lower layer are mutually staggered to match with the air inlet 12 and the air outlet 03 to form a channel of exhausting wet and hot gases and
a flexible stripping frame or a flexible stripping sheet 14 is disposed on each set of roller shafts 06 to separate hard foreign matters 15 contained in wet materials 17; and a cleaning blade 05 is disposed below each roller shaft to clean remaining materials in a toothed groove.

The case body 11 is composed of a plurality of independent modularized case bodies 11 with a uniform installation size, each case body 11 is provided with one layer of roller mills, the roller mills are assembled according to an upper-lower layer manner to form a composite granulator.

An air outlet 03 installed on a lateral side of the case body 11 of a top layer of roller mills in the composite granulator is connected to an induced draft fan for exhausting waste and wet gases; when a hot air flow is used as a heat source, the air inlet and the air outlet are provided in two sides of the same layer or in intersecting sides of respective layers.

Each set of roller shafts of each layer of roller mills of the composite granulator may have identical or different diameters, effective lengths, as well as the toothed grooves of identical or different shapes and sizes.
the roller shafts of a lower layer of roller mills of the composite granulator has a greater tooth face linear velocity and volume flow rate than those of the roller shafts of a next higher layer of roller mills; and tooth face linear velocities and volume flow rates of the toothed roller shafts of the remaining adjacent layers of roller mills may be adjusted according to volumetric features of materials containing various rates of moisture.

An included angle θ of a flexible blade carrier is 60∼180 °; a gap τ between a flexible blade carrier and excircle surfaces of the roller shaft 04 of the roller mills is 2∼ 10 mm, generally 5 mm; and a draft angle γ of the roller shaft 02 of the roller mills is 5∼ 90 °.

A diameter D of the roller shafts is 150∼2000 mm, generally 300 mm; the plurality of pairs of toothed roller shafts may have identical or different diameters, and there may be identical or different numbers of pairs of roller shaft; and milling gaps of the layers of roller mills are vertically misaligned.

A meshing surface of the roller shaft 02 is a toothed meshing surface or plane joint surface, and a toothed groove of the toothed meshing surface is semicircular or is of a shape with a flat bottom; an included angle α between a connecting line from a tooth tip of a cleaning blade (05) to a shaft center of a roller shaft and a vertical symmetrical center line of a shaft center of the roller shaft is 5∼135 °; and an included angle β between a bottom surface of a tooth piece and a bottom of a tooth tip or a tangent line of the excircle surface is 0∼30 °.

The present invention achieves purposes of bringing maximum moisture of granular materials to the surface, greatly improving a drying power of the materials, and providing a reliable guaranty for saving heat for drying, reducing power consumption, and prolonging the service life of equipment. This is drying means which is simplest, most energy-saving and wear-free in the industry of drying wet and viscous materials such as filter cakes, creamy materials, slurry materials and pasty materials, and has a great contribution to the drying industry in the world;

the present invention employs the simple flexible blade carrier (or angle iron) to strip (or reject) hard foreign matters mixed in granulated dried soft materials. This is a most direct and convenient method of sorting hard foreign matters in soft, wet and viscous materials, and also has a great contribution to industries of disposing sewage sludge, river mud, mines and the like;

the present invention is simple in structure, convenient to operate, small in friction and high efficiency; characteristics such as softness, viscosity, thickness and poor permeability adverse to drying are transformed into advantageous conditions of composite granulation; in a case of only requiring a small power of a transmission roller mill and a friction force of approximately pulling materials (a very small area) at an edge of a tooth portion in a sliding manner on a very small surface of a toothed roller, creamy materials, pasty materials, slurry materials and cake materials are directly transformed into monomer materials which have dried surfaces and crackles and are mutually non-sticky. Moisture in the materials may be maximally brought to surfaces by repeating combination for many times, so that the drying power of the materials is greatly improved, a great convenience is brought to a subsequent drying process, and thus the kinetic energy consumption and the heat energy consumption are reduced; and hollowed-out granule shapes can be formed in repeated granulation, and thus the granule permeability is increased, and moisture inside granules is more favorably rapidly evaporated.

### BRIEF DESCRIPTION OF THE DRAWINGS

FIG. 1 is a schematic view of a composite granulator with a single-set multi-layer structure according to the present invention;
FIG. 2 is a schematic view of a composite granulator with a multi-set multi-layer structure according to the present invention;
FIG. 3 to FIG. 6 show a schematic view of a toothed construction and a meshing condition of roller shafts of the present invention;

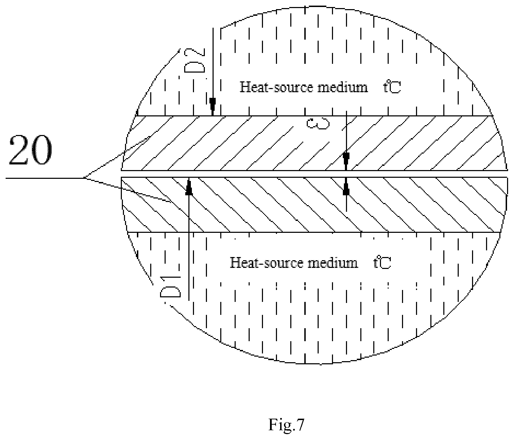

FIG. 7 shows a schematic view of a construction of plane meshing roller shafts.
   01 temporary feed storage bin; 02 first layer of roller mills;
   03 air outlet; 04 swivel joint;
   05 cleaning blade; 06 roller shaft;
   07 baffle plate; 08 second layer of roller mills;
   09 bar-shaped materials; 10 nth layer of roller mills;
   11 equipment case body; 12 air inlet;
   13 granular materials; 14 flexible stripping frame;
   15 hard foreign matters; 16 support frame;
   17 wet materials; 18 flat-bottomed toothed groove;
   19 semicircular toothed groove; 20 roller shaft wall;
   21 meshing-molding groove; 22 heat source medium.

### DETAILED DESCRIPTION OF THE PREFERRED EMBODIMENTS

To make an objective, a technical solution and advantages of the present invention be more clear and obvious, the present invention will be illustrated in details below in conjunction with the accompanying drawings and specific embodiments.

The present invention is a novel granulating device assembled based on a general roller mill. When meshing toothed roller shafts of roller mills rotate in opposite directions, materials placed at local edges of tooth surfaces are dragged into axial grooves of a pair of two toothed nip rollers with rotation of teeth under an effect of gravity and friction of local tooth tips and continue to move downwards until entering a toothed meshing groove to naturally form bars. The toothed rollers with an appropriately-designed diameter may be selected for different materials to meet a balance of a vector sum of a suction friction force and a bar-forming force, such that the bar-forming force is minimum. Meanwhile, for some soft materials containing irregular and hard unwanted substances (such as bricks and debris in river channel sludge), various diameters of roller shafts and a flexible stripping frame (sheet or angle iron) are provided to bounce off hard granules by using an action force and a reaction force to achieve effects of sorting and stripping.

Meanwhile, a heat source (steam or heat transfer oil, etc.) introduced into inner cavities of toothed rollers of the roller mills are conducted by walls of the roller shafts. In no-load areas, the walls of the roller shafts absorb energy stored by the internal heat source (or heat energy provided by hot air), which is instantly conducted to the surfaces of the foregoing materials. Due to great thermal differences, heat is conducted at a high velocity. Surfaces of formed materials are heated rapidly, and then the surfaces of bar-shaped granules are rapidly heated. Further, due to rapid heating, there are phenomena such as crackles, surface embrittlement and rapid volume shrinkage of steam films formed between surfaces of the materials and surfaces of the meshing toothed grooves. Bar-shaped materials may be naturally released from the toothed grooves under the effect of gravity due to generation of such crackles and embrittled surfaces and volume shrinkage. A high-pressure steam film formed when the bar-shaped materials (surfaces) are heated in the grooves have a capability of isolating bar-shaped granules from bottom surfaces of the grooves; and since a draft angle, the bar-shaped materials with dried and embrittled surfaces are naturally released from the grooves under the effect of gravity, and thus a first step of drying and embrittling the formed surfaces is completed.

Due to their great viscosity (or other characteristics), the foregoing crackled and dried bars or granules with embrittled surfaces may contain water substances (or solvents) that are partly internal water (crystal water or the like) in molecular structures. Consequently, the water substances (or solvent) in interiors of granules may not be easily transferred to their exteriors. Also, high-temperature thermal radiation and heat convection in areas of the toothed rollers not in contact with materials allow surfaces of the foregoing materials released from the toothed grooves to keep being heated and evaporating. Therefore, the embrittled surfaces will not soon get damp and will remain independent, dried, embrittled and crackled after falling into toothed roller shafts of a second layer of roller mills and before being dragged inside toothed grooves. A tooth face linear velocity and a volume flow rate of the toothed roller shafts of the second layer of roller mills are higher than those of toothed roller shafts of a first layer of roller mills. When long formed bars enter the toothed grooves of the toothed roller shafts of the second layer of roller mills, since the linear velocity or volume flow rate increase, the long bars are snapped and freely fall on the rollers of the second layer of roller mills. This kind of free fall causes the long bars to be distributed irregularly on the tooth faces of the toothed roller shafts of the second layer of roller mills and be cut into short bars or irregular granules by the toothed rollers of the second layer of roller mills. Surfaces of these objects are rapidly heated in the toothed grooves of the second layer of rollers, high-pressure steam films may likewise be formed on the tooth faces, tooth bottoms and tooth sides to isolate and to embrittle, crackle and harden material surfaces. When the formed granules move to bottoms, they are released from the toothed grooves under the effect of gravity. As described above, when entering a pair of toothed roller shafts of a third layer of roller mills, bars are shorter, granules are more uniform, and granule surfaces are further embrittled, crackled and hardened.

As required, multiple layers and multiple sets of the foregoing roller mills may be disposed vertically to satisfy the requirements of processing capacity, surface drying granulation, and separation of big and hard materials (such as bricks and stones).

The excircle linear velocity of higher and lower layers of roller mills and the toothed volume flow rate of their meshed toothed grooves or individual radial toothed grooves are keys to ensuring normal operation. In normal conditions, the excircle linear velocity and the toothed volume flow rate of an adjacent lower layer of roller mills must be slightly greater than those of a next higher layer of roller mills, so that the lower layer of tooth faces may sufficiently absorb the volumetric flow from the higher layer and pull apart bar-shaped materials falling from the higher layer to facilitate granulation. For materials whose volumes rapidly shrink after they form noodles (granulated) and after their surfaces are dried, the excircle linear velocity and the toothed volume flow rate of a lower layer may be appropriately increased according to the degree of actual volume shrinkage.

During granulation, through the differences between the excircle linear velocities and the toothed volume flow rates of the higher and lower layers, the noodles are pulled apart, randomly fall into the surfaces of the roller shafts at a lower layer and are cut to again form new noodles (short noodles or granules).

During the foregoing process, as the outer surfaces of the noodles (or granules) contact the outer surfaces of the roller shafts, heat is instantly conducted, and the surfaces rapidly absorb heat and evaporate. Each operation may create outer surfaces that are dried, embrittled and crackled. When the materials are passed to a lower layer, the previously dried, embrittled and crackled outer surfaces are drawn into interiors of new noodles (granules). The water substances previously in the interiors are broken and emerge to become new surfaces that rapidly absorb heat and evaporate. After multiple layers and multiple times of repeatedly absorbing heat, being torn and cut, and having their surfaces evaporate and dried, materials are gradually formed into irregular granules which are approximately hollowed out and are greater in surface areas. Further, the surfaces of the roller shaft are instantly cleaned by matched cleaning blades to ensure a heat exchange efficiency, a heat storing efficiency and a heat releasing efficiency of the surfaces of the roller shafts of the roller mills.

When materials to be granulated and dried may be contaminated with hard foreign matters (river sludge, sewage sludge to be transported, mineral separation etc.), a flexible blade carrier (or angle iron) is installed at an upper portion of a first layer of roller shafts of the composite granulator. Soft materials are pressed into the toothed grooves of the toothed grooves of the roller mills under the force of gravity, while hard foreign matters (bricks, debris, stones, screw bolts, screw nuts, metal and non-metal ware, splinters, etc.) are retained above the flexible blade carrier or angle iron. With the movement of the roller shafts of the roller mills, soft materials on the surfaces of the hard foreign matters are stripped and the hard foreign matters possibly inserted into gaps between the roller shafts and the angle iron are constantly bounced off gap areas under the spring force of the flexible blade carrier (or angle iron) during movement because the action force and the reaction force are produced simultaneously. The hard foreign matters forever float above the flexible blade carrier (or angle iron) until reaching a certain amount, and then are eliminated by halt. A worldwide problem will be solved by employing such a simple technology.

All pairs of toothed rollers of the granulator of the present invention are provided with movable toothed blades or flat blades for cleaning residual objects off the grooves or the surfaces to keep the surfaces in working conditions.

A structure of a composite granulator of the present invention is described in details below in conjunction with given embodiments and the accompanying drawings.

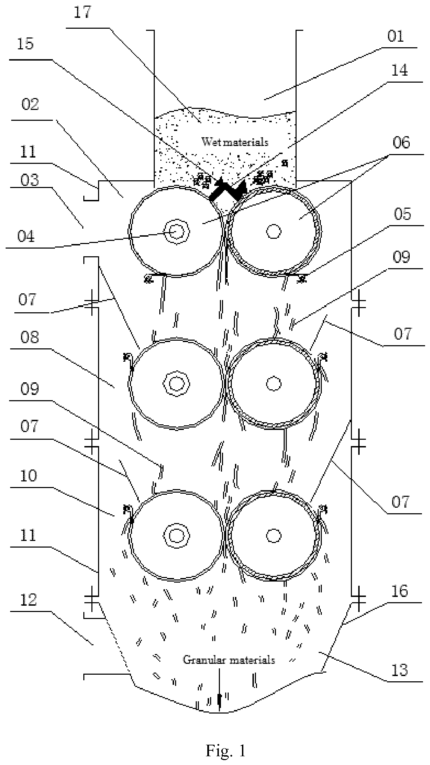

Firstly, with reference to FIG. 1, a composite granulator provided by the present invention comprises main components such as a temporary feed storage bin 01, a first layer of roller mills 02, a second layer of roller mills 08, an n^{th} layer of roller mills 10, an equipment case body (with a single layer or an assembly of multiple layers) 11, a power system, and a granulator support frame. An air outlet 03, an air inlet 12, roller shafts 06 and baffle plates 07 are disposed on the equipment case body 11; swivel joints 04 and cleaning blades 05 are disposed on the roller shaft 06 of each layer of roller mills; a flexible stripping frame (or sheet) 14 is disposed on the roller shaft 06 of the first layer of roller mills, and the configuration of the composite granulator is completed.

The temporary feed storage bin 01 is installed in an upper portion of the equipment case body 11 to cover a first layer of roller mills 02 with wet materials and keep the roller mills in a fully-loaded working state at all times. Negative pressure is well kept in the interior of the composite granulator. The upper portion of the first layer of roller mills 02 is blocked to prevent air from being sucked in. Further, a material level sensor (not shown in the figure) is disposed in the temporary feed storage bin 01 to transmit material level signals to an automatic control system, so that a material transportation system may timely replenish the storage with materials and keep the material level above a minimum threshold.

A set of composite granulator generally comprises two or more layers of roller mills. Each layer of roller mills includes a set of roller shaft 06 assembled to form an individual operation layer; general swivel joints 04 serving as important parts of input and output of a heat source are disposed on roller shafts 06 of all roller mills; matched cleaning blades 05 serving as important parts of cleaning residual materials off meshed toothed grooves are likewise installed on roller shafts 06 of the roller mills; the roller shafts 06 of all roller mills may have identical or different diameters and meshed toothed grooves (18, 19, 21) of identical or different shapes and sizes. In the overall design of the composite granulator, the principle of the design is to allow materials falling from a higher layer of roller shaft to be timely transported by an adjacent lower layer of roller shaft. From a first layer to a second layer, since the first layer of materials have high pressure from self-gravity, high moisture, and soft texture, and the second layer of materials have low pressure from self-gravity, reduced moisture, and harder texture, when gap areas formed by the pairs of roller shafts relatively moving are identical, the volume of materials falling from the first layer is greater than that of materials falling from the second layer, and thus the volume flow rate of the second layer must be greater than that of the first layer. In subsequent lower layers, materials have basically equal pressure from self-gravity. Therefore, under the precondition that materials falling from an adjacent higher layer must be completely carried away by a lower layer without causing blockage, the velocity ratio needs to be reduced according to the material's feature of volumetric change to increase the heat exchange efficiency of the roller shafts.

A flexible blade carrier (or angle iron) 14 is installed on an upper portion of the first layer, in this way, soft materials are pressed into the toothed grooves of the roller mills under the effect of gravity, while the hard foreign matters 15 are retained above the flexible blade carrier or angle iron 14. With the movement of the roller shafts of the roller mills, the soft materials on the surfaces of the hard foreign matters 15 are stripped and the hard foreign matters 15 possibly inserted into gaps between the roller shafts 06 of the roller mills and the angle iron are separated (bounced off) and float above the flexible blade carrier 14 under the spring force of the flexible blade carrier 14 during movement. After a certain amount of the soft material are accumulated, the spring force is converted into pulse force (torque) signals (completed by an instrument control system), which are outputted to remind an operator to shut down the granulator for cleaning.

In normal conditions, a peripheral linear velocity and a toothed volume flow rate of the roller shaft 06 when the second layer of roller mills 08 rotate are higher than those when the roller shafts 02 of the first layer of roller mills rotate. The toothed volume flow rate refers to a product of an area of a gap between teeth between the roller shafts moving relative to each other and a tangential linear velocity of the roller shafts, that is, a volume flow rate of the gap between roller shafts moving relative to each other. The peripheral linear velocity and the toothed volume flow rate of the roller shafts when the n^{th} layer of roller mills 10 rotate are higher than those when roller shafts of a (n-1)^{th} layer of roller mills rotate. The increase in velocity is determined by the volumetric feature of the granulated materials during granulation and drying. The accumulation volume of materials in a composite process of granulation and drying comprises three parts: a volume expansion section, a volume unchanged section, and a volume reduction section from top to bottom. When the volume is obviously reduced, the peripheral linear velocity and the toothed volume flow rate of the roller shafts when a lower layer of roller mills rotate are lower than those when a higher layer of roller mills rotate. All these are determined according to volumetric features of materials with different moisture. As in conventional roller mills, a cleaning blade 05 is installed at a bottom (lateral) end of a roller mill to timely clean residual materials off the teeth of the roller mill.

Swivel joints 04 of heat source supply and output mechanisms may be installed on the roller shafts of all roller mills so as to constantly provide heat energy.

The present invention provides three ways of heating, respectively, steam, heat transfer oil and hot flue gas (or hot gas). The steam and the heat transfer oil are direct heat-exchanging heat sources, the hot flue gas (or hot gas) is a direct heat-exchanging heat source, and the steam is a clean energy, while the heat transfer oil is a looped energy, and the hot flue gas (hot gas) is a heat source which may cause secondary pollution.

The steam may be transported with large flow rate, hot heat capacity and long distance, meanwhile, has no pollution to the environment when the possibly leaking, is high in heat capacity in unit mass, and may be reflowed to a boiler for being repeated heated, and is suitable for a great project and a project which may be matched with a heat source around.

The heat transfer oil may be suitable for medium-small drying heating projects with heat sources; a large flow rate of the heat transfer oil is required for the same heat load due to low heat capacity, and a consumption power of a pump package is high; it has the advantages of completely realizing heat energy closed-loop circulation and being small in heat transmission loss; it may pollute the environment when possibly leaking.

The hot flue gas (hot gas) is relatively low in heat load per unit and large in volume flow rate of waste gas; tail gas purification is a most obvious problem. It is suitable for application only when no harmful substances (such as odor, toxic gases and the like) are contained in dried materials, otherwise, a handling device for up-to-standard release of tail gases, which is high in operation cost, is required.

An integral structure of the equipment case body 11 (a single layer or an assembly of multiple layers) comprises multiple specific structure forms and sizes. Generally, each layer of roller mills is installed in an independent case body to be assembled vertically with other layers. The case bodies may have standardized installation sizes to be assembled into a composite granulator with multiple modular layers. This may facilitate standardized and modular production and the increasing or reducing of the number of layers of roller mills (heat exchange size) in the composite granulator in the process of system debugging. In special cases, a case body of a single layer may be used to install multiple layers of multiple sets of roller mills of an entire set of device. An air outlet 03 is disposed in a first layer of the granulator and an air inlet 12 is disposed on a support frame 16, so that the evaporated waste gas may be immediately exhausted, the content of moisture inside the case body is reduced, and the evaporation power is improved. Each layer of case body includes a baffle plate 07 to guide materials into a lower layer of roller mills. Disposed in an appropriate position, the baffle plate 07 is lengthened to serve as a guide plate of internal gas. The air flow inside the entire assembled case body is guided by the guide plate to pass through each layer of roller mills gradually according to a certain designed flow direction and take away evaporated water vapor, so that the drying power is enhanced; and the lowest end of the case body is chained with the support frame 16 of the granulator.

A structural form of the support frame 16 of the granulator is a reference pattern having an air inlet 12 with a blind. The support frame 16 of the granulator may also be composed of a downstream device support (such as a plate-type dryer member). In this case, granules discharged from the granulator may directly enter a downstream device for further drying without a transportation system. Gas or a heat source may also be directly replenished through a connector of the downstream device.

Gas inside the case body 1 may be exhausted by controlling induced draft under enclosed negative pressure, may be exhausted by vacuum extracting or open dissipating. If the gas is required to be replenished, an air preheating system may be disposed. If the content of a certain element in the gas inside the granulator needs to be controlled, a corresponding monitoring system may be disposed. Alternatively, a bypass may be disposed in the closed loop cycling system to exhaust evaporated gas.

The transmission (not shown in the figure) of the composite granulator is as follows: a swivel joint 04 is installed on one end of a roller shaft 06 of the roller mills and a power transmission mechanism (such as a gear wheel, a chain wheel, a transmission shaft, a speed reducer and a motor) is installed on another end. Generally, each composite granulator is transmitted and operated by a set of power (an assembly of the speed reducer and the motor) through the chain wheel, the gear wheel or the transmission shaft. A transmission velocity is subjected to segmented control by an automatic control system according to requirements for features of a physical linear velocity and the toothed volume flow rate.

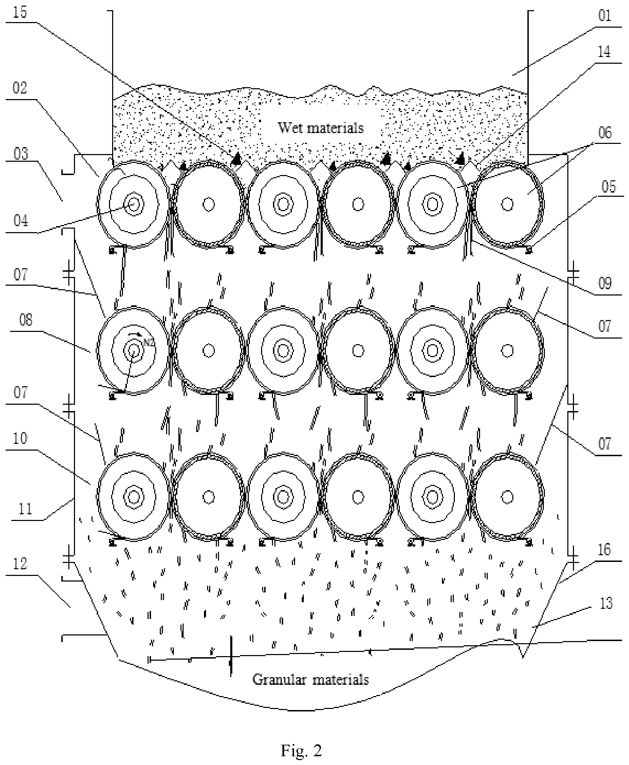

FIG. 2 is a schematic view of a composite granulator with a multi-set multi-layer structure according to the present invention. Each layer includes multiple sets of roller shafts (each pair of roller shafts is one set), which form a plurality of milling surfaces, and thus the capacity of the temporary feed storage bin 01 is increased, and the efficiency of transporting and milling wet materials is improved, and the composite granulator meets various needs.

The roller shafts of the roller mills may be arranged into a single line of multiple layers (such as n layers) as shown in FIG. 1, or multiple lines (m lines) of multiple layers (such as n layers) as shown in FIG. 2.

Diameters D₁, D₂, ... Dₙ of the pairs of the toothed roller shaft may be identical, i.e. D₁=D₂= ... =Dₙ, or random values.

Excircle diameters D of the roller shafts are determined by the hardness and flow features of the materials. If the diameters are high, the material compression amount of roller shafts of a first layer of noodle makers is great, and therefore the resistance is great and the power consumption is large. If the diameters are small, the heat exchange area of the single roller shaft of the granulator is small, a device with equal evaporation power may seem complicated and would have lower efficacy if including more shafts. Therefore, the design of the excircle diameter of the roller shafts must satisfy a requirement of smoothly forming noodles (outputting band-shaped materials) on a premise of a lower power consumption so as to achieve a purpose of saving energy, reducing power consumption, and accomplishing granulation and drying.

The D may be within a range of 150∼2000 mm, generally 300 mm (an actual outer diameter of the roller shafts should be deducted from ε).

The D may be a random value, that is, the diameters of the roller shafts of a same layer of noodle makers may be different, and the diameters of roller shaft of different layers of noodle makers may also be different. Such assembled granulator may also meet production requirements.

In a case of many layers of noodle makers, a plurality of power sources may be disposed to reduce a load of a driving shaft.

For materials with smaller viscosity, if there are identical numbers of pairs of noodle makers having identical diameters, milling gaps between the noodle makers will be in a same vertical line, which causes the materials to fall vertically through the layers of noodle makers without any heat exchange at lower layers to affect a heat transfer granulation effect. Therefore, the milling gaps need to be misaligned. Having different numbers of pairs of roller shafts or having different diameters of roller shafts may both misalign the milling gaps between the noodle makers, so that falling materials may be distributed on the roller shafts to achieve the heat transfer effect.

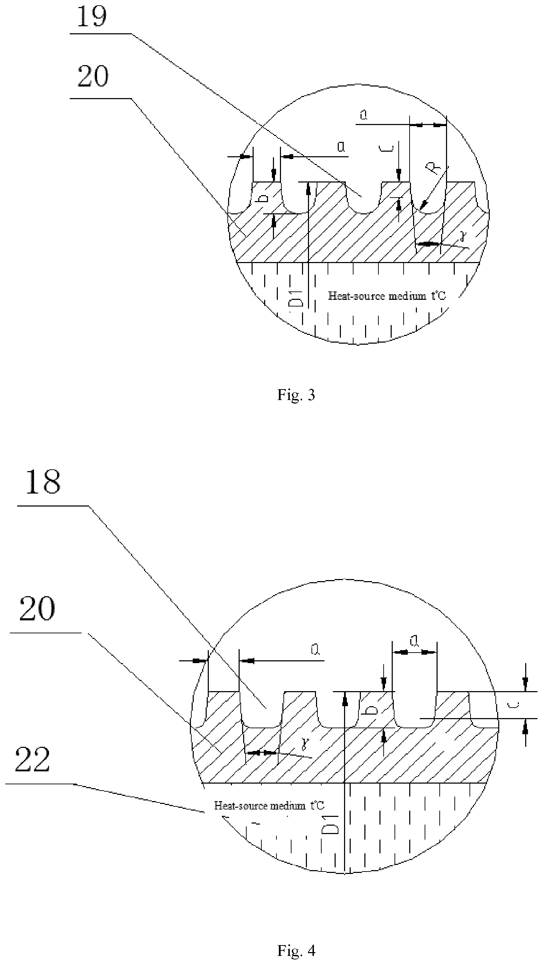

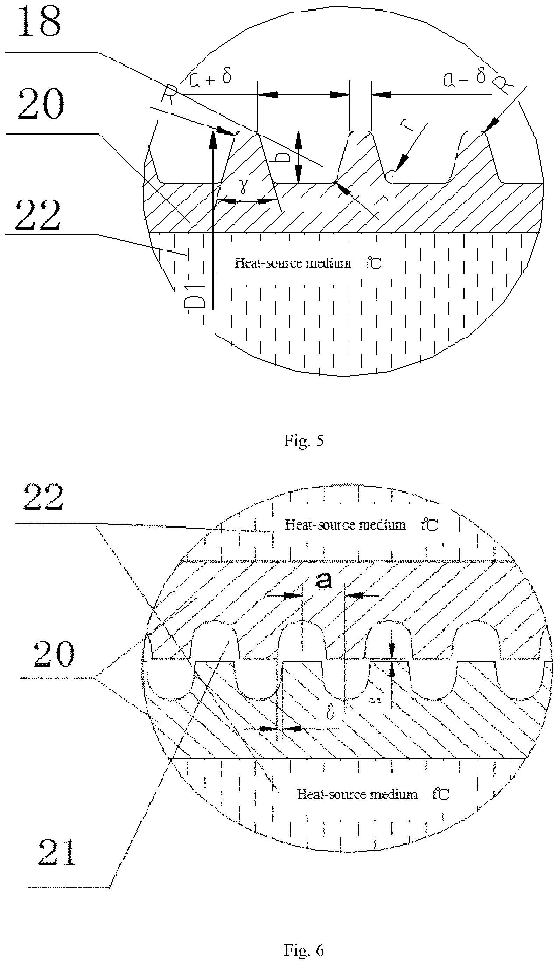

FIG. 3 to FIG. 6 shows schematic views of a toothed construction and a meshing condition of roller shafts of the present invention. Constructions of tooth faces 18, 19 and the meshing condition of the roller shafts of the roller mills are shown. In figures, 21 is a meshing-molding groove, 22 is a heat source medium, 20 is a roller shaft wall, a is a tooth width, b is a tooth depth, c is a distance between a center of a circle of a tooth bottom and a tooth face, and R is a radius of the circle of the tooth bottom.

Wherein γ refers to a draft angle, which is determined according to a viscosity, a humidity and a hardness of materials and hard pebbles that may be contained in the materials. The draft angle is generally set between 5∼90 °.

D represents excircle diameters of the roller shafts, which are determined as required, may be identical or different, and may be determined by the hardness and flow features of the materials. If the diameters are high, the material compression amount of roller shafts of a first layer of noodle makers is great, and therefore the resistance is great and the power consumption is large. If the diameters are small, the heat exchange area of the single roller shaft of the granulator is small, a device with equal evaporation power may seem complicated and would have lower efficacy if including more shafts.

For materials with smaller viscosity, if there are identical numbers of pairs of noodle makers having identical diameters, milling gaps between the noodle makers will be in a same vertical line, which causes the materials to fall vertically through the layers of noodle makers without any heat exchange at lower layers to affect a heat transfer granulation effect. Therefore, the milling gaps need to be misaligned. Having different numbers of pairs of roller shafts or having different diameters of roller shafts may both misalign the milling gaps between the noodle makers, so that falling materials may be distributed on the roller shafts to achieve the heat transfer effect. Accordingly, the outer diameters of the roller shafts are designed to be different in this case.

δ refers to an axial gap between meshing tooth tips. ε refers to a radial gap between the meshing tooth tips. δ and ε are determined by the hardness, the viscosity and the flow feature of the materials, so that sufficient gaps are provided to ensure the cutting and the forming (noodle-shaped) of materials and also to ensure motion interference caused by heat expansion of the roller shafts after being heated.

α refers to an included angle between a connecting line from a tooth tip to shaft centers of roller shafts and a vertical center line of the shaft centers of the roller shafts, which is set at 5∼135 °. The included angle is determined by the arrangement of each layer of the composite granulator and a friction pressure angle. A greater angle is arranged for the roller shaft located at an edge as an installation space of the case body allows, generally 105 °. Restricted by the installation space of the case body, the roller shaft located in a middle of each layer of case body may only be angled at 5∼45 °, generally 15 °.

β refers to an included angle between a bottom surface of a tooth piece and a tangent line of a tooth bottom (excircle) surface at a tooth tip, which is set at 0∼30 °, generally 15 °. A friction pressure angle is disposed, so that a blade may smoothly clean residual materials off the grooves.

θ refers to an included angle in the flexible blade carrier, which is set at 60∼180 °. The included angle is determined by the features of the hard foreign matters that may be contained in the soft materials and that need to be excluded.

τ refers to a gap between the flexible blade carrier and an excircle surface of the roller shaft 04 of the roller mills. A size of the gap is generally determined by the features of the hard foreign matters that may be contained in the soft materials and that need to be excluded, which is set at 2∼10 mm, generally 5 mm.

## Claims

1. A composite granulator comprising a case body, a temporary feed storage bin, a rolling unit, a heating supply system, and a power system, wherein:
said case body (11) is provided with an air outlet (03), an air inlet (12) and a bottom support frame (16), wherein said air inlet (12) is disposed on said support frame (16) in a blind form; wet and hot gases produced inside said case body (11) are exhausted by employing manners such as exhausting said gases inside said case body, controlling induced air under enclosed negative pressure, vacuum extracting or open dissipating;
said temporary feed storage bin (01) is installed at an upper portion of said case body (11) for placing wet materials (17) therein;
said rolling unit comprises two or more layers of roller mills, each layer of roller mills having one or more sets of roller shafts (06) to be assembled into a single roller mill layer; said layers of roller mills are installed inside said case body (11) and vertically arranged;
said heating supply system comprises swivel joints (04) disposed on said roller shafts (06) of each layer of roller mills, which are matched with said air outlet (03) and said air inlet (12) to provide three kinds of heating supply forms, respectively steam, heat transfer oil and a hot gas; said steam and said heat transfer oil serve as indirect heat-exchanging heat sources, and said hot gas serves as a direct heat-exchanging heat source;
said power system comprises a power assembly and a transmission system, said power assembly is combined by one or more sets of velocity reducers and motors, said transmission system is composed of a chain wheel, a gear wheel or a transmission shaft, and said transmission velocity is subjected to segmented control by an automatic control system.
wherein baffle plates (07) are disposed on said case body (11), and said baffle plates (07) are respectively installed at two sides of each layer of roller mills, said baffle plates (07) at one side are lengthened to be in contact with an inner wall of said case body (11), and said lengthened baffle plates (07) at an upper layer and a lower layer are mutually staggered to match with an air inlet (12) and an air outlet (03) to form a channel of exhausting wet and hot gases.
wherein a flexible stripping frame or a flexible stripping sheet (14) is disposed on said each set of roller shafts (06) to separate hard foreign matters (15) contained in wet materials (17); and a cleaning blade (05) is disposed below each roller shaft (06) to clean remaining materials in a toothed groove.

2. The composite granulator according to claim 1, wherein said case body (11) is composed of a plurality of independent modularized case bodies (11) with a uniform installation size, each case body (11) is provided with one layer of roller mills, the roller mills are assembled according to an upper-lower layer manner to form a composite granulator.

3. The composite granulator according to claim 2, wherein an air outlet (03) installed on a lateral side of the case body (11) of a top layer of roller mills in said composite granulator is connected to an induced draft fan for exhausting waste and wet gases; when a hot air flow is used as a heat source, an air inlet and an air outlet are provided in two sides of the same layer or in intersecting sides of respective layers.

4. The composite granulator according to claim 3, wherein each set of roller shafts of each layer of roller mills of said composite granulator can have identical or different diameters, effective lengths, as well as the toothed grooves of identical or different shapes and sizes.

5. The composite granulator according to claim 3, wherein roller shafts of a lower layer of roller mills of said composite granulator has a greater tooth face linear velocity and volume flow rate than those of the roller shafts of a next higher layer of roller mills; tooth face linear velocities and volume flow rates of the toothed roller shafts of the remaining adjacent layers of roller mills are adjusted according to volumetric features of materials containing various rates of moisture.

6. The composite granulator according to claim 5, wherein an included angle θ of a flexible blade carrier is 60∼180 °, a gap τ between a flexible blade carrier and excircle surfaces of a roller shaft (04) of roller mills is 2∼10 mm, generally 5 mm; and a draft angle γ of said roller shaft (02) is 5∼90 °.

7. The composite granulator according to claim 6, wherein a diameter D of said roller shafts is 150∼2000 mm, generally 300 mm; said plurality of pairs of toothed roller shafts have identical or different diameters, and there are identical or different numbers of pairs of roller shaft; milling gaps of layers of roller mills are vertically misaligned.

8. The composite granulator according to claim 7, wherein a meshing surface of said roller shaft (02) is a toothed meshing surface or plane joint surface, and a toothed groove of said toothed meshing surface is semicircular or is of a shape with a flat bottom; an included angle α between a connecting line from a tooth tip of a cleaning blade (05) to a shaft center of a roller shaft and a vertical symmetrical center line of a shaft center of said roller shaft is 5∼135 °; an included angle β between a bottom surface of a tooth piece and a bottom of a tooth tip or a tangent line of said excircle surface is 0∼30 °.

## Patentansprüche

1. Verbundwerkstoff-Schneidmühle, einen Gehäusekörper, einen temporären Zufuhrspeicherbehälter, eine Walzeinheit, ein Heizversorgungssystem und ein Stromversorgungssystem umfassend, wobei:
der Gehäusekörper (11) mit einem Luftauslass (03), einem Lufteinlass (12) und einem unteren Stützrahmen (16) ausgestattet ist, wobei der Lufteinlass (12) in einer blinden Form auf dem Stützrahmen (16) angeordnet ist; Nass- und Heißgase, die in dem Gehäusekörper (11) entstehen, ausgeblasen werden durch die Anwendung von Methoden wie beispielsweise dem Ausblasen der Gase in dem Gehäusekörper, der Steuerung der induzierten Luft unter eingeschlossenem Unterdruck, Vakuumextraktion oder offenem Abführen;
wobei der temporäre Zufuhrspeicherbehälter (01) an einem oberen Abschnitt des Gehäusekörpers (11) installiert ist, um feuchte Materialien (17) darin zu lagern;
wobei die Walzeinheit zwei oder mehr Lagen von Wälzmühlen umfasst, wobei jede Lage von Wälzmühlen einen oder mehrere Sätze von Walzenwellen (06) umfasst, die in einer einzelnen Wälzmühlenage anzuordnen sind; wobei die Lagen von Wälzmühlen in dem Gehäusekörper (11) installiert und vertikal angeordnet sind;
wobei das Heizversorgungssystem Drehgelenke (04) umfasst, die auf den Walzenwellen (06) jeder Lage von Wälzmühlen angeordnet sind, die an den Luftauslass (03) und den Lufteinlass (12) angepasst sind, um drei Arten von Heizversorgungaform bereitzustellen, und zwar jeweils Dampf, Wärmeträgeröl und ein Heißgas; wobei der Dampf und das Wärmeträgeröl als indirekte wärmetauschende Wärmequellen dienen, und das Heißgas als eine direkte wärmetauschende Wärmequelle dient;
wobei das Stromversorgungssystem eine Leistungsanordnung und ein Übertragungssystem umfasst, die Leistungsanordnung aus einem oder mehreren Sätzen von Geschwindigkeitsuntersetzungs-Getrieben und Motoren zusammensetzt ist, das Übertragungssystem aus einem Kettenrad, einem Zahnrad oder einer Antriebswelle besteht, und die Übertragungsgeschwindigkeit einer segmentierten Steuerung durch ein automatisches Steuerungssystem unterliegt,
wobei Leitbleche (07) auf dem Gehäusekörper (11) angeordnet sind, und die Leitbleche (07) jeweils auf zwei Seiten jeder Lage von Wälzmühlen installiert sind, wobei die Leitbleche (07) an einer Seite so verlängert sind, dass sie in Kontakt mit einer Innenwand des Gehäusekörpers (11) stehen, und die verlängerten Leitbleche (07) an einer oberen Lage und einer unteren Lage gegeneinander versetzt angeordnet sind, so dass sie an einen Lufteinlass (12) und einen Luftauslass (03) angepasst sind, so dass ein Kanal zum Ausblasen von Nass- und Heißgasen gebildet wird,
wobei ein flexibler Abstreifrahmen oder ein flexibles Abstreifblatt (14) auf jedem Satz von Walzenwellen (06) angeordnet ist, um harte Fremdkörper (15), die in den feuchten Materialien (17) enthalten sind, abzutrennen; und eine Reinigungsklinge (05) unterhalb jeder Walzenwelle (06) angeordnet ist, um verbleibende Materialien in einer gezahnten Nut zu reinigen.

2. Verbundwerkstoff-Schneidmühle gemäß Anspruch 1, wobei der Gehäusekörper (11) aus einer Vielzahl von unabhängigen modularisierten Gehäusekörpern (11) mit einer einheitlichen Baugröße zusammengesetzt ist, wobei jeder Gehäusekörper (11) mit einer Lage von Wälzmühlen versehen ist, wobei die Wälzmühlen in einer von den unteren zu den oberen Lagen gehenden Weise zusammengebaut sind, um eine Verbundwerkstoff-Schneidmühle zu bilden.

3. Verbundwerkstoff-Schneidmühle gemäß Anspruch 2, wobei ein Luftauslass (03), der auf einer lateralen Seite des Gehäusekörpers (11) einer oberen Lage von Wälzmühlen in der Verbundwerkstoff-Schneidmühle installiert ist, mit einem Saugzug verbunden ist, um Abgase und Nassgase auszublasen; wobei, sofern ein Heißluftstrom als Wärmequelle verwendet wird, ein Lufteinlass und ein Luftauslass an zwei Seiten derselben Lage oder auf sich überschneidenden Seiten der entsprechenden Lagen bereitgestellt werden.

4. Verbundwerkstoff-Schneidmühle gemäß Anspruch 3, wobei jeder Satz von Walzenwellen jeder Lage von Wälzmühlen der Verbundwerkstoff-Schneidmühle identische oder unterschiedliche Durchmesser, effektive Längen sowie gezahnte Nuten mit identischen oder unterschiedlichen Formen und Größen aufweisen kann.

5. Verbundwerkstoff-Schneidmühle gemäß Anspruch 3, wobei Walzenwellen einer unteren Lage von Wälzmühlen der Verbundwerkstoff-Schneidmühle eine größere lineare Zahnflankengeschwindigkeit und einen größeren Volumenstrom [haben] als die der Walzenwellen einer nächsthöheren Lage von Wälzmühlen; lineare Zahnflankengeschwindigkeiten und Volumenströme der gezahnten Walzenwellen der verbleibenden angrenzenden Lagen von Wälzmühlen gemäß den volumetrischen Merkmalen der Materialien angepasst werden, welche verschiedene Feuchtigkeitsgehalte haben.

6. Verbundwerkstoff-Schneidmühle gemäß Anspruch 5, wobei ein eingeschlossener Winkel θ eines flexiblen Klingenträgers 60 ∼ 180° beträgt, ein Lücke τ zwischen einem flexiblen Klingenträger und den umkreisenden Flächen einer Walzenwelle (04) von Wälzmühlen 2 - 10 mm, im Allgemeinen 5 mm, beträgt; und ein Schrägwinkel γ der Walzenwelle (02) 5 ∼ 90° beträgt.

7. Verbundwerkstoff-Schneidmühle gemäß Anspruch 6, wobei ein Durchmesser D der Walzenwellen 150 ∼ 2000 mm, im Allgemeinen 300, beträgt mm; wobei die Vielzahl von Paaren von gezahnten Walzenwellen identische oder unterschiedliche Durchmesser haben, und identische oder unterschiedliche Anzahlen von Paaren von Walzenwellen vorhanden sind; Mahlspalte der Lagen von Wälzmühlen vertikal verstellt ausgerichtet sind.

8. Verbundwerkstoff-Schneidmühle gemäß Anspruch 7, wobei es sich bei einer Eingriffsfläche der Walzenwelle (02) um eine gezahnte Eingriffsfläche oder eine ebene Verbindungsfläche handelt, und eine gezahnte Nut der gezahnten Eingriffsfläche halbkreisförmig ist oder eine Form mit einer flachen Unterseite hat; ein eingeschlossener Winkel α zwischen einer Verbindungslinie von einer Zahnspitze einer Reinigungsklinge (05) zu einer Wellenmitte einer Walzenwelle und eine vertikal symmetrische Mittellinie einer Wellenmitte der Walzenwelle 5 ∼ 135° beträgt; ein eingeschlossener Winkel β zwischen einer unteren Fläche eines Zahnteils und einer Unterseite einer Zahnspitze oder einer Tangentenlinie der umgebenden Fläche 0 - 30° beträgt.

## Revendications

1. Granulateur composite comprenant un corps de boîtier, un bac de stockage d'alimentation temporaire, une unité de roulement, un système d'alimentation de chaleur, et un système de puissance, où:
ledit corps de boîtier (11) est pourvu avec une sortie d'air (03), une entrée d'air (12) et un cadre support inférieur (16), où ladite entrée d'air (12) est disposée sur ledit cadre support (16) dans une forme aveugle; les gaz humides et chauds produits à l'intérieur dudit corps de boîtier (11) sont évacués en employant des manières telles que d'évacuer ledit gaz à l'intérieur dudit corps de boîtier, contrôler l'air induit sous pression négative enfermée, extraction de vide ou dissipation ouverte;
ledit bac de stockage d'alimentation temporaire (01) est installé sur une portion supérieure dudit corps de boîtier (11) pour placer les matériaux humides (17); où
ladite unité de roulement comprend deux ou plusieurs couches de laminoirs, chaque couche de laminoirs ayant un ou plusieurs jeux d'arbres de rouleaux (06) pour être assemblées dans une seule couche de laminoir; lesdites couches de laminoirs sont installées à l'intérieur dudit corps de boîtier (11) et disposées verticalement;
ledit système d'alimentation de chaleur comprend les joints pivotants (04) disposés sur lesdits arbres de rouleaux (06) de chaque couche de laminoirs, qui sont adaptés pour correspondre avec ladite sortie d'air (03) et ladite entrée d'air (12) pour fournir trois types de formes d'alimentation de chaleur, respectivement vapeur, huile de transfert de chaleur et un gaz chaud; ladite vapeur et ladite huile de transfert de chaleur servent comme sources de chaleur à échange de chaleur indirect, et ledit gaz chaud serve comme une source de chaleur à échange de chaleur direct;
ledit système de puissance comprend un ensemble de puissance et un système de transmission, ledit ensemble de puissance est combiné par un ou plusieurs jeux de réducteurs de vitesse et moteurs, ledit système de transmission est composé d'une roue de chaîne, une roue dentée ou un arbre de transmission, et ladite vitesse de transmission est soumise au contrôle segmenté par un système de contrôle automatique,
où les plaques déflectrices (07) sont disposées sur ledit corps de boîtier (11), et lesdites plaques déflectrices (07) sont installées respectivement aux deux côtés de chaque couche de laminoirs, lesdites plaques déflectrices (07) à un côté sont allongées pour être en contact avec une paroi intérieure dudit corps de boîtier (11), et lesdites plaques déflectrices allongées (07) à une couche supérieure et une couche inférieure sont mutuellement décalées pour correspondre avec une entrée d'air (12) et une sortie d'air (03) pour former un canal d'évacuation de gaz humides et chauds,
où un cadre flexible ou une feuille flexible (14) est disposée sur ledit jeu d'arbres de rouleaux (06) pour séparer les matières étrangères dures (15) contenues dans les matériaux humides (17); et une lame de nettoyage (05) est disposée au-dessous de chaque arbre de rouleaux (06) pour nettoyer les matériaux restants dans une cannelure de dent.

2. Granulateur composite selon la revendication 1, où ledit corps de boîtier (11) est composé d'une pluralité de corps de boîtier indépendants modularisés (11) avec une dimension d'installation uniforme, chaque corps de boîtier (11) est pourvu avec une couche de laminoirs, les laminoirs sont assemblés selon un mode de couches supérieure-inférieure pour former un granulateur composite.

3. Granulateur composite selon la revendication 2, où une sortie d'air (03) installée sur un côté latérale du corps de boîtier (11) d'une couche supérieure de laminoirs dans ledit granulateur composite est connectée à un ventilateur à tirage induit pour échapper les résidus et les gaz humides; quand un flux d'air chaud est utilisé comme une source de chaleur, une entrée d'air et une sortie d'air sont pourvues dans les deux côtés de la même couche ou dans les côtés qui se croisent des couches respectives.

4. Granulateur composite selon la revendication 3, où chaque jeu d'arbres de rouleaux de chaque couche de laminoirs dudit granulateur composite peut avoir les diamètres identiques ou différents, les longueurs effectives, aussi bien que les cannelures dentées de formes et tailles identiques ou différentes.

5. Granulateur composite selon la revendication 3, où les arbres de rouleaux d'une couche inférieure de laminoirs dudit granulateur composite a une vitesse linéaire de surface de dent et le débit volumique plus grandes que ceux des arbres de rouleaux d'une couche suivante supérieure des laminoirs ; les vitesses linéaires de surface de dent et les débits volumiques des arbres de rouleaux dentés des couches adjacentes restantes de laminoirs sont ajustés conformément aux caractéristiques volumétriques des matériaux contenant différents taux d'humidité.

6. Granulateur composite selon la revendication 5, où un angle inclus θ d'un support de lame flexible est entre 60∼180°, un écart τ entre un support de lame flexible et les surfaces en cercle exinscrit d'un arbre de rouleaux (04) de laminoirs est de 2∼10 mm, en général 5 mm; et un angle de dépouille γ dudit arbre de rouleaux (02) est 5∼90°.

7. Granulateur composite selon la revendication 6, où un diamètre D desdits arbres de rouleaux est de 150∼2000 mm, en général de 300 mm; ladite pluralité de paires d'arbres de rouleaux dentés ont des diamètres identiques ou différents, et il y a des nombres identiques ou différents de paires d'arbres de rouleaux; les trous de fraisage de couches de laminoirs sont verticalement désalignés.

8. Granulateur composite selon la revendication 7, où une surface de couplage dudit arbre de rouleaux (02) est une surface de couplage dentée ou surface de joint plane, et une cannelure dentée de ladite surface de couplage dentée est demi-circulaire ou est d'une forme avec un fond plat; un angle inclus α entre une ligne de connexion d'une pointe de dent d'une lame de nettoyage (05) à un centre d'arbre d'un arbre de rouleaux et une ligne de centre symétrique verticale d'un centre d'arbre dudit arbre de rouleaux est 5∼135°; un angle β inclus entre une surface inférieure d'une part de dent et un fond d'une pointe de dent ou une ligne tangente de ladite surface en cercle exinscrit est 0∼30°.
